# EUROPEAN PATENT SPECIFICATION

(11) **EP 0 337 737 B1**
(45) Date of publication and mention of the grant of the patent: **05.07.1995**
(21) Application number: 89303576.6
(22) Date of filing: 11.04.1989
(51) Int. Cl.: C08F 240/00

(54) **Method for producing "poly-N-butene oils" from C4-fraction residues**
Verfahren zur Herstellung von Poly-N-butylenöl aus einer Rest-C4-Fraktion
Procédé de préparation d'huiles de poly-N-butène d'une fraction-C4 résiduelle

(30) Priority: 15.04.1988 CS 2583/88
(43) Date of publication of application: 18.10.1989
(73) Proprietor: NESTE OY, FIN-02150 Espoo (FI)
(72) Inventor: Marek, Miroslav, Praha 2 (CS); Halaska, Vlastimil, Praha 4 (CS); Pecka, Jan, Praha 6 (CS); Dolezal, Vladimir, Praha 3 (CS); Kubanek, Vladimir, Praha 6 (CS)
(74) Representative: Ablewhite, Alan James

(56) References cited:
- DE-A- 1 934 905
- DE-A- 2 904 314
- DE-A- 2 929 180
- GB-A- 2 023 154
- DATABASE CHEMICAL ABSTRACTS, (HOST:STN), 1988, ref. no. 109(26):233842k, Columbus, Ohio, US; V Stepina et al.: "Properties and possible uses of poly(n-butene) oils"

## Description

The invention pertains to a method for producing "Poly-n-butene oils" from the residue of C₄-fraction which comes off from the pyrolysis C₄-fraction after separation of 1,3-butadiene and isobutylene.

The oligomers of alpha- and iso-olefins, produced by the cationic polymerization with AlCl₃, BF₃ or alkylaluminium halides as initiators, belong to technically important synthetic oils. The polymerization of propylene and higher linear alpha-olefins is carried out mostly without an auxiliary solvent, i.e. in bulk, to oils with molecular mass M̅ₙ = 300 to 1000. The production of these oils employs monomers with a relatively high purity (more than 98%).

On the other hand, low-molecular weight polymers of isobutylene with oily to semisolid consistence are produced not only from the pure monomer, but also by the polymerization in the pyrolysis C₄-fraction already freed of 1,3-butadiene where isobutylene is present in a high concentration ranging from 30 to 55 wt.-%. This depleted C₄-fraction, also called rafinate I, contains from C₄-olefins still n-butenes, which may be polymerized or copolymerized with isobutylene. Considering that isobutylene polymerizes cationically much more readily than n-butenes, products obtained by polymerization of olefins in the depleted C₄-fraction consist predominantly of polymers of isobutylene and a small amount of its copolymers with n-butenes. These products are produced industrially and are available on market under the name "Polybutenes".

The polymerization of isobutylene in the rafinate I can be performed also entirely selectively without participation of the present n-butenes. A mixture of hydrocarbons falling off in such a polymerization after separation of polyisobutylene contains concentrated n-butenes. Besides the selective polymerization, isobutylene present in the rafinate I is recently mostly processed to the lead-free anti-knock methyl tert-butyl ether (MTBE). Also from this production a hydrocarbon mixture rich in n-butenes comes off and has about the same composition as the residue after selective polymerization of isobutylene, but may contain a low concentration of methanol. The waste mixture of hydrocarbons from both processes is also called "rafinate II" and is characterized by the absence of isobutylene or its low concentration. The waste mixture resulting from the selective polymerization of isobutylene or from the production of MTBE mostly contains 30 to 55 wt.-% 1-butene, about 10 wt.-% cis-2-butene, and 17 wt.-% trans-2-butene. In addition to the said n-butenes it may contain of olefins still a residue of isobutylene, but its concentration is ususally not more than 3 wt.-%. n-Butane and isobutane are present in the rafinate II as saturated C₄-hydrocarbons and mostly do not exceed 30 wt.-%. Wastes of the C₄-fraction (rafinate II) contain as much as 75% olefins able to polymerize cationically and are, for this reason, a valuable secondary raw material.

While "Polybutenes" are produced by the polymerization of isobutylene in the rafinate I already for many years, an industrial production of "Poly-n-butenes" by the direct polymerization of 1-butene with 2-butenes in the rafinate II is not yet known. n-Butenes can be polymerised by aluminium chloride (AlCl₃), but application of this initiator is connected with certain problems. Because aluminium chloride (AlCl₃) is not sluble in parafinic hydrocarbons, its dosing into reaction mixture requires not very suitable auxiliary solvents, as are halogenated or aromatic hydrocarbons. The yields obtained using aluminium chloride are not very satisfactory (see, for example, DE-A-1934905, page 9, Example 4). The most suitable among them is ethyl chloride which reasonably dissolves aluminium chloride (AlCl₃) and is relatively easily removed from the polymerization product as a low-boiling solvent. On the other hand, however, it makes problems because leaves after polymerization in relief gas together with low-boiling non-reactive hydrocarbons, which are above all used as a fuel. If higher-boiling halogenated solvents are used for dosing of aluminium chloride (AlCl₃), problems arise with their uneasy removal from the reaction product.

Aluminium chloride (AlCl₃) may be metered into reaction medium also in the form of a liquid complex initiator which does not require auxiliary solvents. The liquid complex is formed by the interaction of aluminium chloride (AlCl₃) with toluene or other aromatic hydrocarbon with participation of hydrogen chloride (HCl) or alkyl halogenides. Its disadvantage is that it does not dissolve in the rafinate II and is deposited during polymerization as a heavy viscous liquid at the bottom of the reactor. For this reason, suitable dispergation of the heterogeneous initiator in reaction medium requires an efficient stirring of the mixture and even then the consumption of initiator with respect to the product is relatively high. If the absence of aromatic compounds in the product is needed, these liquid complexes cannot be used, because their aromatic component cannot be removed from the product in a simple way.

The above mentioned shortcomings are avoided in the method for producing "Poly-n-butene oils" according to this invention.

An object of this invention is a method for producing "Poly-n-butene oils" wherein olefins with a prevailing content of 1-butene and cis- and trans-2-butene, present in the mixture of hydrocarbons, known as rafinate II, which is derived from the C₄-fraction after separation of 1,3-butadiene and isobutylene, are polymerized under initiation with boron trifluoride (BF₃) or alkylaluminium chlorides with general formulae R₂AlCl and RAlCl₂ (in which each R represents a C₁ to C₆ alkyl group) in the presence of hydrogen chloride (HCl), hydrogen fluoride (HF), or organic compounds with a reactive chlorine or fluorine bonded to a tertiary-, benzyl- or allyl-carbon atom, as coinitiators, characterised in that the rafinate II is derived from the production of methyl tert-butyl ether or from the selective polymerization of isobutylene, the 1-butene present in a concentration of at least 20 wt.-% being polymerized together with cis- and trans-2-butenes, present in a concentration of at least 15 wt.%, at a temperature of +100°C to -70°C, to form oils with molar mass Mₙ = 300 to 1200.

An important feature is also that the mixture falling off as the rafinate II from the production of methyl tert-butyl ether is beforehand freed of methanol to the value lower than 3000 ppm.

An advantage of the method for producing "Poly-n-butene oils" according to the invention consists in the fact, that the copolymerization of 1-butene with 2-butene in the rafinate II is carried out in the presence of initiators which are well soluble in the reaction medium. Another advantage is that the used initiators must not be dosed into the reaction medium only as a solution in halogenated or aromatic hydrocarbons, but that they may be purposefully dosed also in parafinic hydrocarbons or also without auxiliary solvents. Coinitiators can be metered into reaction medium in the same way as initiators individually also in the rafinate II as such, in olefinic hydrocarbons, and also in halogenated (methyl chloride, methylene dichloride, 1,2-dichloroethane, and others) or aromatic solvents (toluene, benzene, xylene, and others).

Anhydrous hydrogen fluoride (HF), tert-butyl fluoride and benzyl fluoride proved as most suitable coinitiators in the polymerization of n-butenes in rafinate II initiated with boron trifluoride, whereas the best coinitiation effect was observed in the polymerization initiated with alkylaluminium chlorides with anhydrous hydrogen chloride, tert-butyl chloride 2-chlor-2,4,4-trimethylpentan, benzyl chloride, mathallyl chloride and cumyl chloride. However, also other organic compounds with reactive halogen bonded in their molecule to tertiary or allyl carbon atom and compounds with a chloromethyl group on aromatic ring may be used as efficient coinitiators.

Because auxiliary halogenated or aromatic solvents need not be used for initiator dosing in the polymerization of 1-butene with 2-butenes in rafinate II initiated with boron trifluoride or alkylaluminium chlorides, the problems with utilization of hydrocarbons present in the relief gas after polymerization are avoided. If the initiator is dosed in parafinic hydrocarbons, the oils obtained are not depreciated even with a smallest amount of aromatic hydrocarbons.

The composition of residual C₄-fraction coming off as the rafinate II from the production of MTBE or from the selective polymerization of isobutylene may vary within broader limits depending on the way of processing and origin of the pyrolysis fraction. Because the polymerization rate, molar mass of the obtained product and consumption of the initiator depend on the concentration of present n-butenes, it is useful to produce poly-n-butene oil from the residual C₄-fraction containing at least 35 wt.-% of n-butenes.

The higher is the concentration of n-butenes in rafinate, the easier proceeds their polymerization and the consumption of initiator on the product decreases. Considering that the mixture of hydrocarbons, falling off from the production of methyl tert-butyl ether, contains as much as 4% methanol which is the catalytic poison, the rafinate II has to be washed prior to polymerization, advantageously with water, in order to reduce the content of methanol to the value of 3000 ppm or less. On the other hand, the residual C₄-fraction coming off from the selective polymerization of isobutylene in rafinate I is usually so pure that it does not need additional refinement and drying for the polymerization of present n-butenes. The rate of polymerization and conversion attained may be controlled by gradual dosing of initiators and coinitiators. It is expedient to carry out the polymerization in the way that first the coinitiator is added into reaction mixture in a sufficient amount and the polymerization rate and attained conversion are then controlled by gradual addition of the initiator. The polymerization can be carried out up to the conversion of 100% calculated on the olefins present.

The reaction mixture after polymerization is worked out in the common way. The best way is to remove the main part of low-boiling fractions by heating to 100°C and to wash the crude product with water or lime milk in order to remove the residues of catalyst. The oily layer is then refined with bleaching earth for oils and hot filtered through a pressure filter. Lighter fractions are removed by distillation while heated up to 140°C or, if desirable, also higher at pressure 0.1 mm Hg. Colourless or light yellow oils are obtained in this way, the composition of which corresponds mainly to co-oligomers of 1-butene with 2-butenes.

Poly-n-butene oils made according to the invention contain in the polymeric chain an olefinic double bond which exhibits an increased reactivity. Their low polydispersity of molar masses M̅_{w}/M̅ₙ 1.4, resistance of oils to thermal oxidation, low solidification temperature, low volatility, and the fact that they do not leave carbonization residues after combustion or at heat loading are also important. For this reason, these oils have a broad technical use and may be applied also in the cases where commercially available low-molecular weight polyisobutylenes and "Polybutenes" have been used, e.g. after reaction with maleic anhydride for the production of ash-less dispersing agents, as lubrication oils for two-stroke spark-ignition engines, oils for the processing of metallurgical materials by rolling and drawing, in leather and rubber industry, and for hydrophobization of insulating materials. Their hydrogenation may provide high-quality transformer oil, electroinsulation and cable oils, and nontoxic cosmetic oils and white oils.

For the detailed illustration of the invention, the preparation of poly-n-butene oils is further described in several examples.

The polymerizations were carried out either in a glass pressure reactor with volume of 60 ml cooled from outside or in a stainless-steel reactor with volume of 1000 ml. Both reactors were furnished with a magnetic stirrer and a valve for feeding the reactor and dosing of initiator and coinitiator. Temperature of the reaction mixture was detected with a thermocouple and recorded with a line recorder. The polymerization course was controlled by the gradual dosing of initiator so that ther required temperature in reactor was maintained with accuracy ±5°C.

Poly-n-butene oil was prepared either from the residual C₄-fraction (rafinate II), which was obtained as relief gas after polymerization of isobutylene in rafinate I without any refinement and drying, or from the residual C₄-fraction falling off as rafinate II from the production of MTBE, which was washed 3times with water in order to remove methanol and dried in liquid state over solid KOH in a pressure bottle. The mixture after rafination had the following composition: 41.1 wt.-% 1-butene, 15.1 wt.-% trans-2-butene, 9.7 wt.-% cis-2-butene, 2.2 wt.-% isobutylene, 24.6 wt.-% n-butane, 6.4 wt.-% isobutane, and 0.6 wt.-% propane. The content of methanol was always lower than 3000 ppm and the concentration of methyl-tert.butyl ether was also lower than 0,3 wt.-%.

### Example 1

A glass reactor with volume 60 ml was charged with 25 g rafinate II, which originated from the production of MTBE, and 0.015 g anhydrous hydrogen chloride (HCl) in gaseous state was added at -20°C. By gradual addition of the solution of ethylaluminium dichloride in heptane in small portions, the strongly exothermic polymerization was carried out in such a way, that temperature of the cooled and stirred reaction mixture did not increase after separate doses of initiator above -15°C. The polymerization was stopped after 30 min by addition of alcohol, volatile fractions were removed by heating the reaction mixture to 100°C at 10 mm Hg, and the product was filtered under pressure after addition of 0.2 g bleaching earth at 80°C. The slightly yellowish oil with number average molar mass M̅ₙ = 690 was obtained. The total consumption of ethylaluminium dichloride was 0.47 wt.-% on the product at the conversion of 94.1% calculated on the present olefins.

### Example 2

A stainless-steel reactor with volume 1000 ml was charged with 450 g residual C₄-fraction (rafinate II) falling off from the production of MTBE, which was freed of methanol by washing with water and dried over KOH. After addition of 0.25 g gaseous hydrogen chloride (HCl) into reaction mixture at 60°C, the polymerization was carried out by gradual addition of liquid ethylaluminium dichloride under vigorous stirring. During polymerization, the temperature in cooled reactor was maintained between 60°C and 70°C. When a temperature increase have not been observed after the last addition of initiator, the reaction mixture was cooled to +20°C and washed with lime milk. The hydrocarbon layer was separated, mixed with bleaching earth and filtered by pressure. Low-boiling hydrocarbons and volatile fractions were removed by heating to 100°C at 10 mm Hg and oil with molar mass M̅ₙ = 490 (determined by VPO) was obtained. The consumption of initiator on the product was 0.44 wt.-% at the attained conversion of 97.1% calculated on olefins in the initial mixture.

### Example 3

n-Butenes in the rafinate II from the production of MTBE were polymerized at -70°C by gaseous boron trifluoride (BF₃) under coinitiation with anhydrous hydrogen fluoride (HF). A glass reactor cooled to the chosen temperature was charged with 25 g rafinate II and 0.01 g gaseous hydrogen fluoride was introduced. The polymerization proceeded by gradual introducing of boron trifluoride in the region ±5°C around the chosen temperature. The reaction mixture after completed polymerization was heated to +20°C, partially degased and 0.2 g powdered calcium oxide (CaO) and 0.1 g water was added. After thorough mixing, the mixture was filtered and the crude product was freed of volatile fractions by heating to 100°C at 10 mm Hg. The resulting colourless oil had molar mass M̅ₙ = 320 at the consumption of 0.38 wt.-% boron trifluoride (BF₃) on the product. The yield of oil was 93.6 wt.-% related to the present n-butenes.

### Example 4

Into 450 g rafinate II from the production of MTBE, 0.5 g tert-butyl chloride was added and then ethylaluminium dichloride in hexane solution was metered in small doses at -40°C under continuous stirring of the reaction mixture. The polymerization was stopped after 50 minutes by addition of ethanol, the content of reactor was heated to +30°C and washed with water. After draining the lower aqueous layer, bleaching earth was added into reactor, the crude product was vigorously stirred and then filtered under pressure. Volatile and low-boiling fractions were removed from the product by gradual heating to 140°C at 0.1 mm Hg. The obtained lightly yellowish oil had number average molar mass M̅ₙ = 1120 at the yield of 87% calculated on present olefins. The consumption of ethylaluminium dichloride on product was 0.77 wt.-%.

### Example 5

The polymerization of n-butenes in rafinate II was carried out at 90-97°C under initiation with ethylaluminium sesquichloride added into the reaction mixture in the liquid state without auxiliary solvent. Other conditions of the procedure were the same as in example 2. The obtained product had molar mass M̅ₙ = 320 and the consumption of initiator on the product was 0.55 wt.-% at the attained conversion of 96.2%.

### Example 6

The polymerization of n-butene in the rafinate II from the production of MTBE was carried out at -20°C under initiation with boron trifluoride (BF₃) and coinitiation with benzyl fluoride. A pressure glass reactor was charged with 25 g rafinate and 0.05 g coinitiator was added. Then gaseous boron trifluoride was gradually added under continuous stirring and cooling so that temperature of the mixture was kept between -20°C and -15°C. The reaction was stopped after 30 min, the reaction mixture was washed with water, and volatile fractions were evaporated at 100°C and 10 mm Hg giving the colourless product with number average molar mass M̅ₙ = 580. The consumption of initiator on the produced oil was 0.35 wt.-%.

The same result was obtained if the polymerization was carried out under analogous conditions with tert-butyl fluoride instead of benzyl fluoride as a coinitiator.

### Example 7

n-Butenes were polymerized in the residual C₄-fraction, in this case also specified as rafinate II, which was obtained as relief gas after selective polymerization of isobutylene in the C₄-fraction freed only of 1,3-butadiene, i.e. in the rafinate I, which contained 45 wt.-% isobutylene, and was assigned for the production of MTBE.

Relief gas obtained after selective polymerization of isobutylene in the rafinate I has the following composition: 30.90 wt.-% butane and isobutane, 42.30 wt.-% 1-butene, and 26.80 wt.-% cis-2-butene and trans-2-butene. This mixture (400 g) was polymerized without further purification and drying at 60°C under initiation with ethylaluminium dichloride added into the reaction mixture as heptane solution. Methallyl chloride was used as a coinitiator which was gradually added without an auxiliary solvent. The polymerization was stopped after 60 min and the product was worked out as in example 2.

The polymerization of present n-butenes occurred in the yield of 94.3% and the obtained oil had molar mass M̅ₙ = 540; the consumption of initiator was 0.55 wt.-% and of coinitiator 0.4 wt.-% calculated on the product.

### Example 8

Poly n-butene oil was made from the rafinate II, which was obtained as relief gas from the polymerization of isobutylene in rafinate I in which besides isobutylene also n-butenes were polymerized in part.

The obtained relief gas consisted of 61.3 wt.-% butane and isobutane, 23.2 wt.-% 1-butene and 15.4 wt.-% 2-butenes. The polymerization was carried out at 60°C under initiation with diisobutylaluminium chloride, which was gradually added in small portions without auxiliary solvent into the reaction mixture containing the beforehand added anhydrous hydrogen chloride in the amount of 0.4 g. The polymerization was stopped after 60 min and the reaction mixture was worked out by the procedure described in example 2. The consumption of diisobutylaluminium chloride was 0.61 wt.-% on the product at the attained conversion of 91.3%. The obtained oil had molar mass M̅ₙ = 470 determined by VPO. The polydispersity measured by GPC was M̅_{w}/M̅ₙ=1,18.

### Example 9

The polymerization of n-butenes in the rafinate II coming off from the production of MTBE was carried out as in example 1 with the distinction that diethylaluminium chloride was used instead of ethylaluminium dichloride as an initiator, which was dosed into the reaction mixture in liquid state without auxiliary solvent. Anhydrous hydrogen chloride (HCl) was added in the beginning of polymerization in the amount of 0.03 g. The polymerization was maintained at temperature around -20°C and stopped after 30 min at the conversion of 85.1% calculated on the present olefins. The consumption of initiator was 0.46 wt.-% on the product. The obtained oil had a light yellow colour and molar mass M̅ₙ = 620 with polydispersity M̅_{w}/M̅ₙ=1,4.

### Example 10

n-Butenes were polymerized in the rafinate II at -20°C using methylaluminium dichloride as an initiator, which was added into the reaction mixture as a solution in toluene, whereas the solution of benzyl chloride was gradually added as a coinitiator. The total benzyl chloride added into 25 g rafinate amounted to 0.1 g and then the polymerization was stopped. The product was isolated from reaction mixture giving oil with molar mass M̅ₙ = 610; the conversion reached during 30 min of polymerization was 85.1% and the consumption of initiator was 0.61 wt.-%.

### Example 11

n-Butenes were polymerized as in example 1 with the distinction that the initiation occurred by gradual addition of the solution of hexylaluminium dichloride and hydrogen chloride at +30°C. The reaction was stopped after 30 min and isolation provided light yellow oil with molar mass M̅ₙ = 510 at the attained conversion of 75.3 wt.-%. The consumption of initiator on product was 0.51 wt.-%.

## Claims

1. A method for producing "Poly-n-butene oils" wherein olefins with a prevailing content of 1-butene and cis- and trans-2-butene, present in the mixture of hydrocarbons, known as rafinate II, which is derived from the C₄-fraction after separation of 1,3-butadiene and isobutylene, are polymerized under initiation with boron trifluoride (BF₃) or alkylaluminium chlorides with general formulae R₂AlCl and RAlCl₂ (in which each R represents a C₁ to C₆ alkyl group) in the presence of hydrogen chloride (HCl), hydrogen fluoride (HF), or organic compounds with a reactive chlorine or fluorine bonded to a tertiary-, benzyl- or allyl-carbon atom, as coinitiators, characterised in that the rafinate II is derived from the production of methyl tert-butyl ether or from the selective polymerization of isobutylene, the 1-butene present in a concentration of at least 20 wt.-% being polymerized together with cis- and trans-2-butenes, present in a concentration of at least 15 wt.%, at a temperature of +100°C to -70°C, to form oils with molar mass Mₙ = 300 to 1200.

2. A method according to Claim 1, wherein the mixture obtained as the rafinate II from the production of methyl tert-butyl ether is first freed of methanol to a content lower than 3000 ppm.

## Patentansprüche

1. Verfahren zur Herstellung von "Poly-n-butenölen", wobei Olefine mit einem überwiegenden Gehalt an 1-Buten und cis- und trans-2-Buten, welche in der als Raffinat II bekannten, aus der C₄-Fraktion nach Abtrennung von 1,3-Butadien und Isobutylen gewonnenen Kohlenwasserstoffmischung vorhanden sind, unter Initiierung mit Bortrifluorid (BF₃) oder Alkylaluminiumchloriden mit den allgemeinen Formeln R₂AlCl und RAlCl₂ (in denen R eine C₁- bis C₆-Alkylgruppe bedeutet) in Gegenwart von Chlorwasserstoff (HCl). Fluorwasserstoff (HF) oder organischen Verbindungen mit einem reaktiven, an ein Tertiär-, Benzyl- oder Allyl-Kohlenstoffatom gebundenen Chlor- oder Fluor-Atom als Co-Initiatoren polymerisiert werden, dadurch gekennzeichnet. daß
das Raffinat II aus der Produktion von Methyl-tert-butylether oder aus der selektiven Polymerisation von Isobutylen gewonnen wird, wobei das in einer Konzentration von mindestens 20 Gew.-% vorhandene 1-Buten zusammen mit cis- und trans-2-Butenen, die in einer Konzentration von mindestens 15 Gew.-% vorhanden sind, bei einer Temperatur von +100°C bis -70°C polymerisiert wird, um Öle mit einer molaren Masse von Mₙ = 300 bis 1200 zu bilden.

2. Verfahren nach Anspruch 1, wobei die Mischung, die aus der Produktion von Methyl-tert-butylether als Raffinat II gewonnen wird, zunächst bis zu einem Gehalt von weniger als 3000 ppm von Methanol befreit wird.

## Revendications

1. Procédé de préparation "d'huiles de poly-n-butène" dans lequel des oléfines avec une teneur prépondérante en 1-butène et en cis- et trans-2-butène, présents dans le mélange d' hydrocarbures, connu comme raffinat II, qui est dérivé de la fraction C₄ après séparation du 1,3-butadiène et de l'isobutylène, sont polymérisées sous initiation avec du trifluorure de bore (BF₃) ou des chlorures d'alkylaluminium avec les formules générales R₂AlCl et RAlCl₂ (dans lesquelles chaque R représente un groupe alkyle en C₁ à C₆) en présence de chlorure d'hydrogène (HCl), de fluorure d'hydrogène (HF), ou de composés organiques avec un atome de chlore ou de fluor réactionnel lié à un atome de carbone tertiaire, de benzyle ou d'allyle, comme co-initiateurs. caractérisé en ce que;
le raffinat II est dérivé de la production de tert-butoxy-méthane ou de la polymérisation sélective de l'isobutylène, le 1-butène, présent en une concentration d'au moins 20% en poids, étant polymérisé en même temps que et avec les cis- et trans-2-butènes, présents en une concentration d'au moins 15% en poids, à une température de +100°C à -70°C pour former des huiles de masse moléculaire Mₙ = 300 à 1200.

2. Procédé selon la Revendication 1, dans lequel le mélange obtenu comme raffinat (II) de la production de tert-butoxy-méthane est d'abord débarrassé du méthanol jusqu'à une teneur inférieure à 3000 ppm.
